Europäisches Patentamt

European Patent Office

Office européen des brevets

(19)

(11) EP 0 862 986 B1

(12) EUROPEAN PATENT SPECIFICATION

(45) Date of publication and mention
of the grant of the patent:
**23.10.2002 Bulletin 2002/43**

(51) Int Cl.[7]: **B29D 30/24**, B29D 30/26

(21) Application number: **98301530.6**

(22) Date of filing: **03.03.1998**

(54) **Tyre building apparatus and method**

Vorrichtung und Verfahren zur Reifenherstellung

Dispositif et procédé pour la fabrication de pneumatiques

(84) Designated Contracting States:
**DE FR GB**

(30) Priority: **04.03.1997 JP 4931897**
**28.05.1997 JP 13837697**

(43) Date of publication of application:
**09.09.1998 Bulletin 1998/37**

(73) Proprietor: **SUMITOMO RUBBER INDUSTRIES
LIMITED**
**Kobe-shi, Hyogo-ken (JP)**

(72) Inventors:
• **Suzuki, Kazuya**
**Shirakawa-shi, Fukushima-ken (JP)**
• **Nishikawa, Toru**
**Shirakawa-shi, Fukushima-ken (JP)**
• **Suzuki, Shinobu**
**Higashishirakawa-gun, Fukushima-ken (JP)**

(74) Representative: **Stewart, Charles Geoffrey**
**Dunlop Tyres Ltd**
**Fort Dunlop, Erdington,**
**Birmingham B24 9QT (GB)**

(56) References cited:
**US-A- 4 923 554**

• **PATENT ABSTRACTS OF JAPAN vol. 018, no.
526 (M-1683), 5 October 1994 (1994-10-05) & JP
06 182901 A (BRIDGESTONE CORP), 5 July 1994
(1994-07-05)**
• **PATENT ABSTRACTS OF JAPAN vol. 095, no.
009, 31 October 1995 (1995-10-31) & JP 07
164555 A (BRIDGESTONE CORP), 27 June 1995
(1995-06-27)**
• **PATENT ABSTRACTS OF JAPAN vol. 015, no.
138 (M-1100), 8 April 1991 (1991-04-08) & JP 03
019831 A (SUMITOMO RUBBER IND LTD), 29
January 1991 (1991-01-29)**

## Description

This invention relates to a tyre building apparatus and its method for pulling and holding a tubular element of tyre a component on the circumference of a tyre building drum in a green tyre production process.

It has been a common procedure in the tyre building process to form a tubular tread ring by winding a rubber belt element and a tread element around a tyre building drum then to remove the tread ring from the tyre building drum by means of a tread ring transferring apparatus and to transfer it to a tubular carcass-ply which is formed independently and the tread ring is placed around the outer circumference of the carcass-ply so they may be united together to form a complete green tyre.

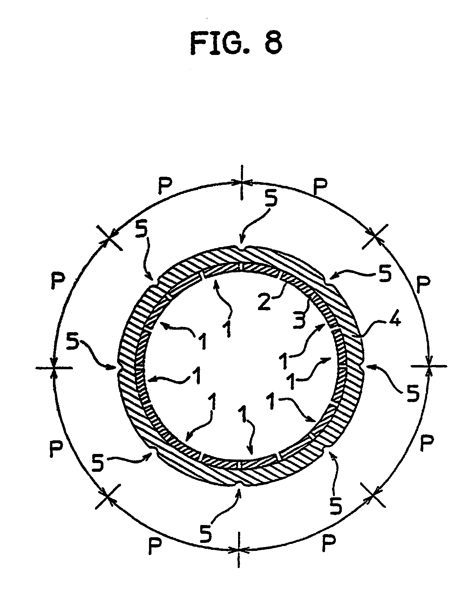

One known example of a tread ring building drum for building the tread ring is shown in Fig. 8. The tread ring building drum is divided into several pieces along the circumferential direction thereof and so it consists of a plurality of segments 2 which are movable in the radial direction. Fig. 8 shows the expanded state of the segments 2 (the expansion state of the tread ring building drum 1) and the segments 2 may also be moved to retracted states, i.e. they are moved radially inwards of the tread rind building apparatus, enabling the removal of the tread ring from the tread ring building drum 1 with ease.

Each of the segments 2 is provided with an opening 3 which communicates with a sub-atmospheric (vacuum) pressure supply source (suction power source; not shown) and the tread ring material 4 which is one of the tyre components is pulled towards the segments by pressure differential set up by the suction acting through the openings 3 so as to properly maintain position and hold the tread ring material 4 on the tread ring building drum 1.

In the aforementioned tyre building apparatus, the openings 3 are arranged along the circumferential direction of the tread ring building drum 1 at equal pitches P. The equal pitch arrangement of the openings 3 along the circumference of the drum 1 causes in the finished tyre some problems regarding the driver's feel of comfort. More specifically, as a result of the equal pitch arrangement of the suction openings 3, it is highly likely that the tread ring has in it a plurality of strained portions (in the form of indentations 5) along the outer circumference of the tread ring at equal pitches as shown in Fig. 8. It has been known to the person skilled in this art that a tyre with such strained portions 5 at regular pitches along the outer circumference thereof has an increased "RFV (radial force variation)" at its particular variation mode, resulting in degraded vibration characteristics of the tyre as a final product. In turn this affects adversely the driving comfort and can even produce some abnormal noise. Thus, the formation of strained portions 5 at equal pitches along the outer circumference of the tread ring, due to the equal pitch arrangement of the suction openings 3, adversely affects the vibration characteristics of the tyre, resulting in degrading the driving comfort of a driver.

Thus, a need has been felt to avoid degradation of the vibration characteristics of the tyre without sacrificing the ability to pull and hold the tread ring material 4 to the tread ring building drum 1.

It is therefore an object of this invention to solve the problems of the conventional apparatus described in the foregoing.

Another object of this invention is to provide a tyre building method and apparatus which enable avoidance of the degradation of the vibration characteristics of the tyre without sacrificing the pulling and holding abilities of the tread ring to the tread ring building drum, thus making it possible to maintain a comfortable driving condition.

According to one aspect of this invention a tyre building apparatus comprises a tyre building drum, for pulling and holding a tyre component, which is formed with a plurality of holder portions for pulling the tyre component to the tyre building drum, wherein the pitch of adjacent holder portions is set to be different from the pitch of another adjacent holder portion along the outer circumference of the tyre building drum.

The holding portions may be suction, i.e. pneumatic or magnetic.

With the aforementioned apparatus, strained portions formed along the outer circumference of the tyre component, when it is being pulled by the holder portions towards the outer circumference of the tyre building drum, are made at irregular pitches along the circumferential direction. This irregular arrangement of the strained portions along the circumferential direction of the tread tyre positively suppresses RFV build-up at some particular variation mode. This in turn enables the tyre to maintain a comfortable driving atmosphere when used on a vehicle. As a result, the problem associated with the conventional apparatus - RFV concentrations on some particular variation mode(s), resulting in undesirable vibration characteristics of the tyre, leading to unpleasant driving conditions - can be solved.

Another aspect of the invention provides a method of building a tyre including the step of pulling a tyre component radially inwardly towards an outer circumference of a tyre building drum at a plurality of portions arranged in the circumferential direction characterised in that the tyre component is pulled at the circumferential pitch of adjacent pair of holding portions different from the circumferential pitch of another adjacent pair of holding portions..

With the aforementioned method, the formation of strained portions along the outer circumference of the tyre component, when it is being pulled by the portions towards the outer circumference of the tyre building drum, is made to be at irregular pitches along the circumferential direction. This irregular arrangement of the strained portions along the circumferential direction of the tread tyre positively affects the suppression of RFV build-up at some particular variation mode. This in turn enables the maintaining of comfortable driving conditions when driving. As a result, the problem associated with the conventional apparatus - RFV concentrations in some particular variation mode(s), resulting in undesirable vibration characteristics of the tyre, leading to unpleasant driving conditions - can be solved.

These and other objects, features and advantages of the present invention will become apparent upon reading the following detailed descriptions by way of example only along with accompanying drawings in which: -

FIG 1 is a schematic diagram showing a side view of a tyre building apparatus of this invention;
FIG 2 is a cross-sectional view showing a first tyre building drum;
FIG 3 is a schematic diagram showing an arrangement of segments forming the first tyre building drum in a plane;
FIG 4 is a schematically developed diagram (a plan view) showing the arrangement of each segment and its suction portions of the first tyre building drum in an expanded state;
FIG 5 is a graph showing a measurement of RFV of a tyre;
FIG 6 is a schematic diagram showing an alternate form of the segments forming the first tyre building drum;
FIG 7 is a schematically developed diagram (a plan view) showing an arrangement of each segment and its suction portions (corresponding to Fig. 6) of the first tyre building drum in an expanded state; and
FIG 8 is a cross-sectional view showing a conventional tyre building drum for use in a tyre building apparatus.

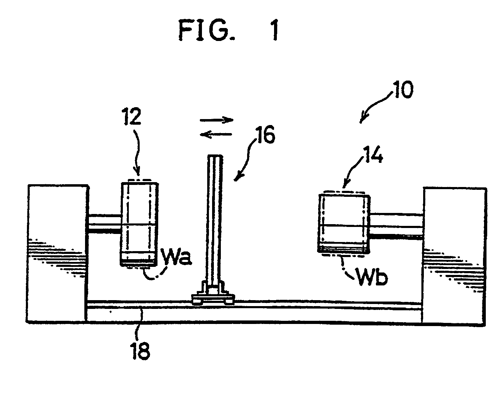

The tyre building apparatus 10 shown in Fig. 1 includes a first tyre building drum 12 (hereinafter simply referred to as the first drum 12) and a second tyre building drum 14 (hereinafter simply referred to as the second drum 14) which drums are opposingly arranged a certain distance apart and a tyre transfer device 16 (hereinafter simply referred to as a transfer 16) which is movable along rails 18 between the first and the second tyre building drums 12 and 14. Using the aforementioned construction, a tyre building component (hereinafter referred to as a tyre component) formed on the first drum 12 can be transferred to the second drum 14 where the tyre component is placed over a carcass-ply built on the second drum 14 to form a one piece unit.

More specifically, at the first drum 12, a tubular sub-assembly Wa (a so-called tread ring) is formed by joining a belt component and a tread component together. While at the second drum 14, a tubular work Wb is formed by assembling carcass components together. Then the tread ring Wa is removed from the first drum 12 by means of the transfer 16 and is brought to the second drum 14 and placed over the carcass Wb to form an integral one piece unit, a so-called green tyre.

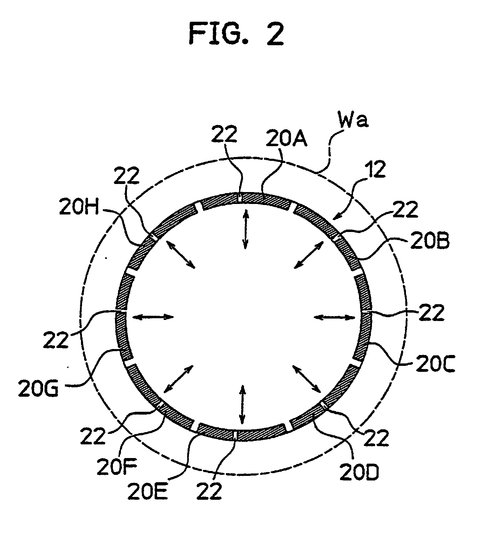

Now, referring to Fig. 2, the first drum 12 consists of a plurality of identical segments that are arranged at equal pitches along its circumferential direction. In this case, eight segments (pieces) 20A - 20H are shown.

Though unillustrated, each of the segments 20A-20H is set to be moveable in the radial direction (as indicated by the arrow in Fig. 2) with a drive means such as an air cylinder. All the segments are synchronously movable between the radially outermost positions and the radially innermost positions. When the segments are at the radially outermost positions as shown in Fig. 2, the first drum 12 is at an expanded state and when the segments are at the radially innermost positions, the first drum 12 is at a retracted state. The first drum 12 is put in its expanded state when the sub-assembly Wa is to be for by winding the belt component and the tread component around the drum 12. Subsequently the drum 12 is moved to its retracted state when the sub-assembly Wa is to be removed from the first drum 12 for transfer to the second drum 14.

Each segment 20A-20H is formed with a plurality of suction holes 22, opening in a radially outward direction and each suction hole 22 is connected to a negative (vacuum) pressure supply source (unillustrated). Thus when the first drum 12 is in the expanded state to form the sub-assembly Wa, a vacuum is generated on the surface of the first drum 12 through these suction holes 22 to pull the work Wa to the outer surface of the first drum 12 and hold the same over the outer surface.

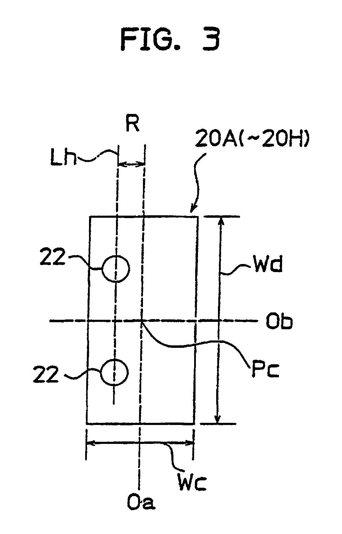

Referring to Fig. 3, each segment 20A - 20H constitutes an equally divided one eighth of the drum 12 and is provided with two circular suction holes 22. All eight segments are identical to each other. The arrangement of two suction hole 22 is such that two are aligned on a line $L_h$, extending in the axial direction of the first drum 12, offset from the axially extended centre line Oa by an amount R and are equally spaced apart from another centre line Ob in the axial direction of the first drum 12. Thus a central point Pc of the segment 20A-20H is defined as the intersection of the circumferential centreline Oa and the axial centreline Ob. At this central point Pc, there is attached the drive means (unillustrated) to move the segment in the radial direction of the first drum 12.

Further, each segment 20A-20H is formed such that when the segment is rotated around its central point Pc by 180 degree in either direction, the segment is still connectable to the drive means. In other words, one arrangement is as shown in Fig.3 - two holes 22, 22 are on the left side of the circumferential centre line Oa and the other arrangement is such that two holes 22, 22 are on the right side of the circumferential centre line Oa. Thus whichever the arrangement for each segment is chosen, the first drum 12 is operable according to this invention.

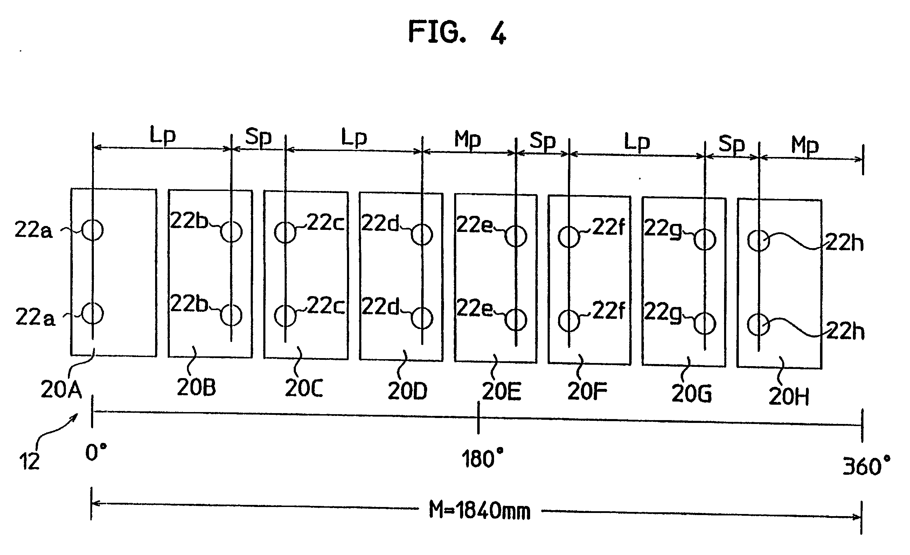

Because of the aforementioned nature of the segments 20A-20H, the first drum 12 as a whole can be constructed such that the circumferential pitch of the suction holes 22 is not equal throughout the circumferential direction of the first drum 12. Specifically, in this embodiment, there are three different pitches possible by arranging the orientation of each segment 20A-20H along the circumference of the first drum 12 as shown in Fig. 4 - one is a long pitch, Lp, another is a medium pitch, Mp, and the other is a short pitch, Sp. More specifically, the very fact that the holes are offset from the circumferential centreline Oa by 5 degrees ("R=5 degrees" in Fig.3) in the circumferential direction of the first drum 12 enables production of those three different pitches; Lp = 55 degrees; Mp = 45 degrees; and Sp = 35 degrees. Further, let us assume a first suction unit consisting of three consecutive three suction holes in the circumferential direction (in a certain direction; in this case a direction from left to right), and a second suction unit consisting of three consecutive three suction holes next to the first suction unit in the certain direction; then we have from the left a first pitch between a first suction hole and a second suction hole; a second pitch between the second suction hole and a third suction hole for the first suction unit and similarly we have corresponding first and second pitches for the second suction unit. Then orientations of the each segment 20A-20H along the circumference of the drum 12 of this invention makes either one of the corresponding pair of first pitches of the first and second suction units or corresponding pair of second pitches of the first and the second suction units to be not identical. Consider the aforementioned arrangement in Fig. 4. Assume the first suction unit consists of three suction holes 22a - 22c on segments 20A - 20C and the second suction unit consists of three suction holes 22c - 22e on segments 20C - 20E, then the segments are so arranged that at least one of the following conditions is satisfied:

(a) a first pitch "Lp" of the first suction unit (22a - 22c) is different from a first pitch "Lp" of the second suction unit (22c - 22e); or
(b) a second pitch "Sp" of the first suction unit (22a - 22c) is different from a second pitch "Mp" of the second suction unit (22c - 22e).

In this instant case, in fact (b) is satisfied.

Because of the aforementioned arrangement of segments, strains (in the form of recessed deformation: called suction strain) formed on the work at the suction step in the tread ring building process is made irregular in pitch in the circumferential direction of the tread ring. As a result, RFV components due to the strained portions of the work Wa (the so-called suction strain) are well dispersed over the lower to higher variation modes, avoiding concentration of the RFV build-up at any particular variation mode. Hence it becomes possible to suppress the rise of RFV at particular variation modes and in turn effectively lower the possibility of degradation of the vibration characteristics of the finished tyre.

Experimental data:

The following table shows a measured result of the RFV of tyres (195/65R15) produced by a conventional tyre building apparatus and the apparatus 10 of this invention in accordance with the measurement method defined in JASO-C607. The results are based on an average value of 20 samples for each apparatus. Where a circumference M of the first drum 12 is 1840mm; a circumferential width Wc of each segment 20A-20H is 200mm; and an axial width Wd of each segment 20A-20H is 300mm.

Table 1

| | 0A | 1H | 2H | 3H | 4H | 5H | 6H | 7H | 8H | 9H | 10H |
|---|---|---|---|---|---|---|---|---|---|---|---|
| Conventional Type | 6.0 | 2.3 | 2.5 | 1.3 | 1.4 | 0.7 | 0.5 | 0.6 | 0.7 | 0.3 | 0.2 |
| Invention | 6.1 | 3.8 | 2.1 | 0.9 | 0.7 | 0.6 | 0.3 | 0.3 | 0.3 | 0.2 | 0.1 |
| (unit in Kg) n=20 samples where "OA" - "10H" in the top line denote the first to tenth variation modes and "OA" denotes the overall variation. | | | | | | | | | | | |

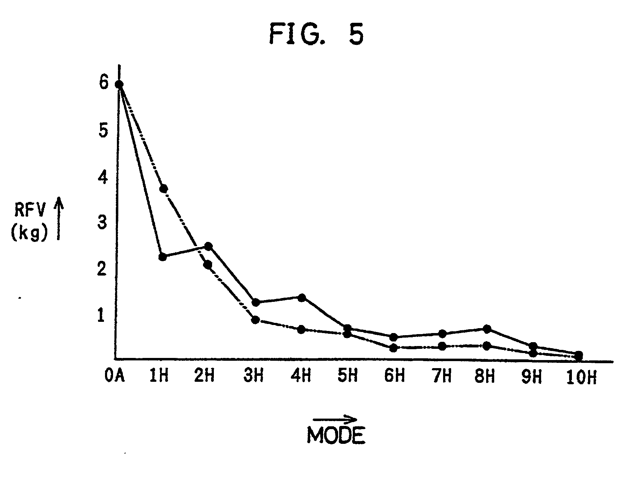

Fig. 5 is a graphical illustration of the measurement results. A solid line shows the measurement result of the tyre with the use of the conventional apparatus and a phantom line indicates the measurement result of the tyre with the apparatus 10 of this invention.

As can be observed in Fig. 5, the RFV components at respective variation modes of the tyre produced by the tyre building apparatus 10 of this invention are generally lower than those corresponding RFV components of the tyres produced by the conventional apparatus. This comparison result clearly illustrates the effectiveness of the arrangement of the suction holes 22 of the tyre building apparatus 10 of this invention with respect to dispersion of the RFV due to the suction strain over ranges of frequencies.

As a result, by the tyre building apparatus 10 with the aforementioned arrangement - suction holes 22 arranged on the first drum 12 at irregular pitches- it is made possible to disperse RFV due to the suction stain over ranges of variation modes, avoiding the degradation of the vibration characteristics of the tyre and resulting in maintaining the comfortable driving atmosphere without sacrificing the holding performance of the work Wa on the drum surface for production.

Further, in the aforementioned tyre building apparatus 10, all the segments 20A - 20H are identical to each other so the drum structure is kept simple. Accordingly, the design, machining (production), part administration, maintenance of the drum and its associated parts are not made difficult because of the aforementioned arrangement.

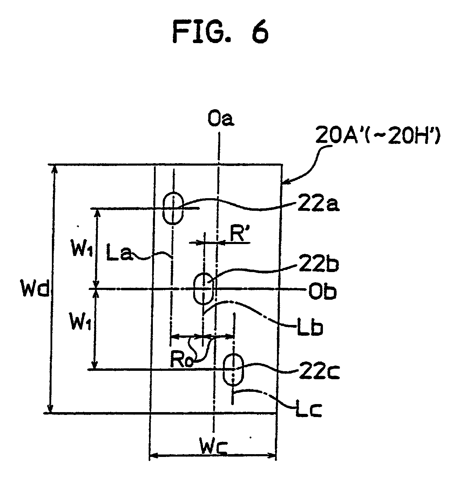

Another embodiment of this invention is shown in Fig. 6 where, in place of the aforementioned segment 20 A (-20H), another form of segment 20A' (-20H') is used.

This segment 20A' (-20H') has three oval shaped suction holes 22a-22c. These oval holes 22a - 22c are arranged on three axially extending lines La- Lc spaced apart from each other by an amount Ro in the circumferential direction (Wc direction). Also the three oval holes 22a - 22c are offset from each other in the axial direction (Wd-direction); the middle one 22b is on the centre line Ob and the top one 22a and the lower one 22c are apart from the middle one 22b an equal distances "w1" in the axial direction (Wd-direction). Note that the term "top" or "bottom" is used to indicate the arrangement of holes as shown in Fig. 6 only; those terms do not survive when viewing the actual apparatus. Further, the middle one 22b is offset from the centreline Oa to the left side (in this figure) by an amount R'. In other words, the oval suction holes 22a-22c are aligned on a line extending through the three centres of the oval holes 22a-22c. Note that the line Ob is the centreline of the segment 20A' in the Wd direction and the line Oa is the centreline of the segment 20A' in the circumferential direction. It should be noted that strictly speaking the amount indicated by Ro and R' notions are arcuate length (angle in radian x radius of the drum). Thus these amounts can also be indicated in dimension by an angle, i.e., degrees or radians.

As in the aforementioned type segment with two holes, the segment 20A' (-20H') can be attached to the drive means in different orientations. Specifically, one orientation of the segment 20A' is such that the middle suction hole 22b is offset from the centre line Oa to the left viewing from one side of the drum in the axial direction thereof and the other orientation of the segment 20A' is such that the middle suction hole 22b is offset from the centre line Oa to the right viewing from the same side of the drum in the axial direction thereof. The segment 20A' in either one of the above mentioned orientations can be attached to the drive means. By changing its orientation among the segments 20A'-20H', the irregular pitch arrangement of the oval suction holes in the circumferential direction can be realised.

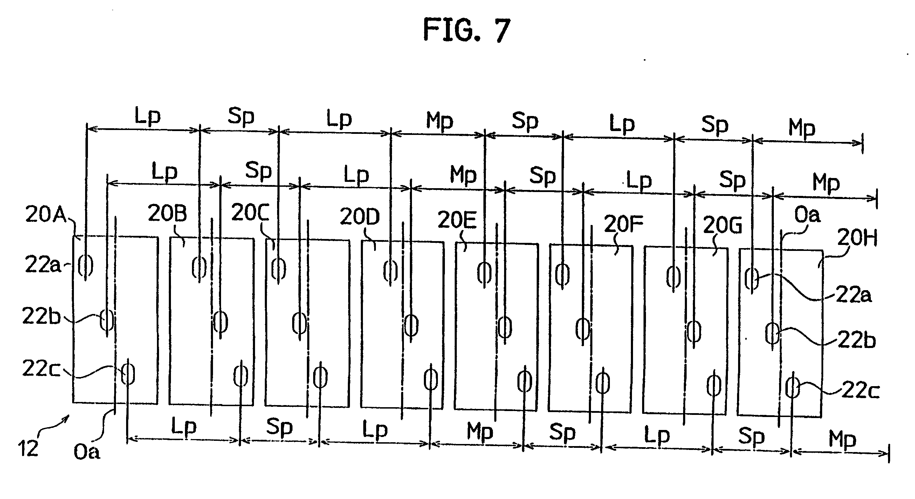

One example of such an irregular pitch arrangement applied to the first drum 12 is shown in Fig. 7. In this arrangement, the top suction holes 22a of segments 20A' - 20H' are arranged such that the circumferential pitch between the adjacent holes are of three kinds, namely a long pitch noted by Lp, a medium pitch noted by Mp, and a short pitch noted by Sp. In the same way, the middle suction holes 22b of segments 20A' - 20H' are arranged such that the circumferential pitch between the adjacent holes are of three kinds, namely Lp, Mp, and Sp. The same is true for the bottom holes 22c of segments 22A' - 22H'. In this embodiment, if we assign 5 degrees and 11.25 degrees to R' and Ro (see Fig 6) respectively, then the pitches Lp, Mp, and Sp are 55 degrees, 45 degrees, and 35 degrees respectively. This is the same as the values of previous embodiment.

Accordingly, with the tyre building drum formed by these segments 20A' - 20H', it is made possible to avoid adverse effect of the vibration characteristics due to the suction performance of the work Wa by the suction holes and secure the comfortable atmosphere in the vehicle while driving.

It should be noted, however, that the first drum 12 described in the above passages is an example of application of this invention, the detailed structure thereof was intentionally omitted thus it should be considered within the scope of the invention, if the particular feature of the tyre building apparatus has an aforementioned features regardless of the other detailed features of the tyre building apparatus.

The embodiment of Fig. 3 has a segment 20A (-20H) with suction holes 22 offset from the centre line Oa by 5 degrees in the circumferential direction and the embodiment of Fig. 6 has a segment 20A' (-20H') with a middle suction hole 22 offset from the centre line O1 by 5 degrees in the circumferential direction; however, these offset amounts R and R' are not limited to 5 degrees. Nevertheless, the offset amount R (R') should be set to be more than three degrees and preferably more than five degrees. In other words, when the offset amount, say R, is less than three degrees, distribution of the suction strains are limited, resulting in poor performance in suppression of RFV build-up for some particular variation modes.

Further, the aforementioned first drum 12 is formed with a plurality of identical segments 20A-20H and the orientations of the segments in the circumferential direction are carefully engineered to produce the desired irregular pitch arrangement of the suction holes 22. However, it is possible to vary the offset amount R in Fig. 3 to three kinds- having three different kinds of segments - to obtain the desired irregular pitch arrangement of the suction holes in the circumferential direction. However, the obvious drawback - having three kinds of segments - is to be accompanied with this arrangement. Further, having more than three kinds of segments having different Ro value (in Fig.3) is still possible to attain the same result of this invention.

Moreover, the number of segments, the shape of each segment, the number of suction holes per segment, the offset amount R and the offset amount R' are considered to be the design choice of those skilled in this art; therefore, this invention is in no way limited to the numbers or quantities described in the aforementioned paragraphs. The important thing is to carefully chose these quantities to effectively suppress RFV over the ranges of variation modes due to the suction strain of the tyre in accordance with the respective structure of the tyre, the structure of the tyre building drum, the desired performance or specifications.

Moreover, the source of suction force is not limited to the aforementioned air suction type, but it could be a magnetic type suction source. In this case, in place of the air suction holes as described in the above embodiments, the magnets may be embedded in the segments to pull and hold the work Wa. In fact there exists a type of tyre building apparatus which uses magnetic force to pull and hold the work Wa when the work Wa contains some ferrous material therein. Specifically, the arrangement of magnet pieces can be set in accordance with the aforementioned arrangements of the suction holes in the segments. Referring to Fig. 3, the suction holes 22 can be replaced by such magnet poles. Further, referring to Fig. 6, the suction holes 22 can also be replaced by magnet, i.e. poles to achieve the same objects of this invention.

Although the present invention has been fully described by way of examples with reference to the accompanying drawings, it is understood that various changes and modifications will be apparent to those skilled in the art. Therefore, unless otherwise such changes and modifications depart from the scope of this invention as defined in the following section, they should be constructed as being included therein.

## Claims

1.    A tyre building apparatus having a tyre building drum (12) for pulling and holding a tyre component, formed with a plurality of holding portions (22) for pulling the tyre component to the tyre building drum (12), **characterised in that** the pitch of adjacent holding portions along the outer circumference of the tyre building drum (12) is set different from the pitch of another adjacent holding portion along the outer circumference of the tyre building drum (12).

2.    A tyre building apparatus as defined in claim 1, **characterised in that** the tyre building drum (12) includes a plurality of identical segments (20).

3.    A tyre building apparatus as defined in claim 1, **characterised in that** the tyre building drum (12) includes: a first holding set having three consecutive holding portions aligned in a certain circumferential direction of the tyre building drum where P1 is a first circumferential pitch between a first holding portion and a second holding and P2 is a second circumferential pitch between the second holding portion and a third holding portion; and a second holding set having three consecutive holding portions in the certain circumferential direction of the tyre building drum, a first holding portion of the second set being the third holding portion of the first holding set and P1' is a first circumferential pitch between the first holding portion and a second holding portion and P2' is a second circumferential pitch between the second holding portion and a third holding portion, such that least one of following relations is met:

$$P1 \neq P1'$$

or

$$P2 \neq P2'.$$

4.    A tyre building apparatus as defined in claim 2 or 3, **characterised in that** the segment is formed with two suction holes (22) as holding portions.

5.    A tyre building apparatus as defined in claim 2 or 3, **characterised in that** the segment is formed with a magnet as holding portion.

6.    A tyre building apparatus as defined in claim 4, **characterised in that** the two suction holes (22) are aligned along a line extending in an axial direction of the tyre building drum.

7.    A tyre building apparatus as defined in claim 6, **characterised in that** each suction hole (22) is offset from a circumferential centreline (Oa) of the segment (20) in the circumferential direction.

8. A tyre building apparatus as defined in claim 2, **characterised in that** the segment is formed with three suction holes (22).

9. A tyre building apparatus as defined in claim 8, **characterised in that** the three suction holes (22) are aligned on a line ($L_h$) extending through each centre of the suction holes.

10. A tyre building apparatus as defined in claim 9, **characterised in that** a middle suction hole (22b) is offset from the circumferential centreline of the segment (Oa) in the circumferential direction.

11. A method of building a tyre including the step of pulling a tyre component radially inwardly towards an outer circumference of a tyre building drum (12) at a plurality of portions arranged in the circumferential direction **characterised in that** the tyre component is pulled at the circumferential pitch of adjacent pair of holding portions (22) different from the circumferential pitch of another adjacent pair of holding portions (22).

12. A method as defined in claim 11, **characterised in that** the tyre component is pulled at three different pitches among adjacent holding portions in the circumferential direction.

13. A method as defined in claim 11, **characterised in that** the tyre component is pulled at a first set consisting of three consecutive portions in one circumferential direction and an adjacent second set consisting of three consecutive holding portions in the same circumferential direction where P1 is a first circumferential pitch between the first portion and the second portion and P2 is a second circumferential pitch between the second portion and a third portion; and P1' is a first circumferential pitch between the first portion and a second portion and P2' is a second circumferential pitch between the second portion and a third portion, and at least one of following conditions is met:

$$P1 \neq P1'$$

or

$$P2 \neq P2'.$$

**Patentansprüche**

1. Reifen-Aufbauvorrichtung mit einer Reifen-Aufbautrommel (12) zum Ziehen und Halten einer Reifenkomponente, die mit einer Vielzahl von Halteabschnitten (22) zum Ziehen der Reifenkomponente zu der Reifenaufbautrommel (12) ausgebildet und **dadurch gekennzeichnet ist, dass** die Schrittweite benachbarter Halteabschnitte längs des Außenumfangs der Reifen-Aufbautrommel (12) anders festgesetzt ist als die Schrittweite anderer benachbarter Halteabschnitte längs des Außenumfangs der Reifen-Aufbautrommel (12).

2. Reifen-Aufbauvorrichtung nach Anspruch 1, **dadurch gekennzeichnet, dass** die Reifen-Aufbautrommel (12) eine Vielzahl von identischen Segmenten (20) enthält.

3. Reifen-Aufbauvorrichtung nach Anspruch 1, **dadurch gekennzeichnet, dass** die Reifen-Aufbautrommel (12) enthält: einen ersten Haltesatz mit drei aufeinander folgenden Halteabschnitten, die in einer bestimmten Umfangsrichtung der Reifen-Aufbautrommel ausgerichtet sind, wobei P1 eine erste Umfangs-Schrittlänge zwischen einem ersten Halteabschnitt und einem zweiten Halteabschnitt und P2 eine zweite Umfangs-Schrittlänge zwischen dem zweiten Halteabschnitt und einem dritten Halteabschnitt ist; und einen zweiten Haltesatz mit drei aufeinander folgenden Halteabschnitten in der bestimmten Umfangsrichtung der Reifen-Aufbautrommel, wobei ein erster Halteabschnitt des zweiten Satzes der dritte Halteabschnitt des ersten Haltesatzes ist und P1' eine erste Umfangs-Schrittlänge zwischen dem ersten Halteabschnitt und einem zweiten Halteabschnitt ist, und P2' eine zweite Umfangs-Schrittlänge zwischen dem zweiten Halteabschnitt und einem dritten Halteabschnitt ist, so dass mindestens eine der folgenden Beziehungen erfüllt ist:

$$P1 \neq P1'$$

oder

$$P2 \neq P2'.$$

4. Reifen-Aufbauvorrichtung nach Anspruch 2 oder 3, **dadurch gekennzeichnet, dass** das Segment mit zwei als Halteabschnitte dienenden Ansaugöffnungen (22) gebildet ist.

5. Reifen-Aufbauvorrichtung nach Anspruch 2 oder 3, **dadurch gekennzeichnet, dass** das Segment mit einem Magneten als Halteabschnitt gebildet ist.

6. Reifen-Aufbauvorrichtung nach Anspruch 4, **dadurch gekennzeichnet, dass** die beiden Ansaugöffnungen (22) längs einer sich in Axialrichtung der Reifen-Aufbautrommel erstreckenden Linie ausgerichtet sind.

7. Reifen-Aufbauvorrichtung nach Anspruch 6, **dadurch gekennzeichnet, dass** jede Ansaugöffnung (22) von einer Umfangs-Mittenlinie (Oa) des Segments (20) in der Umfangsrichtung versetzt ist.

8. Reifen-Aufbauvorrichtung nach Anspruch 2, **dadurch gekennzeichnet, dass** das Segment mit drei Ansaugöffnungen (22) gebildet ist.

9. Reifen-Aufbauvorrichtung nach Anspruch 8, **dadurch gekennzeichnet, dass** die drei Ansaugöffnungen (22) an einer sich durch jede Mitte der Ansaugöffnungen erstreckenden Linie ($L_h$) ausgerichtet sind.

10. Reifen-Aufbauvorrichtung nach Anspruch 9, **dadurch gekennzeichnet, dass** eine mittlere Ansaugöffnung (22b) von der Umfangs-Mittenlinie des Segments (Oa) in der Umfangsrichtung versetzt ist.

11. Verfahren zum Aufbau eines Reifens mit dem Schritt des Ziehens einer Reifenkomponente in Richtung radial nach innen zu einem Außenumfang einer Reifen-Aufbautrommel (12) an einer Vielzahl von in Umfangsrichtung angeordneten Abschnitten, **dadurch gekennzeichnet, dass** die Reifenkomponente an der Umfangs-Schrittlänge eines benachbarten Paares von Halteabschnitten (22) gezogen wird, welche sich von der Umfangs-Schrittlänge eines anderen benachbarten Paares von Halteabschnitten (22) unterscheidet.

12. Verfahren nach Anspruch 11, **dadurch gekennzeichnet, dass** die Reifenkomponente bei in der Umfangsrichtung benachbarten Halteabschnitten an drei unterschiedlichen Schrittlängen gezogen wird.

13. Verfahren nach Anspruch 11, **dadurch gekennzeichnet, dass** die Reifenkomponente an einem ersten Satz, der aus drei aufeinander folgenden Abschnitten in einer Umfangsrichtung besteht, und an einem benachbarten zweiten Satz, der aus drei aufeinander folgenden Halteabschnitten in der gleichen Umfangsrichtung besteht, gezogen wird, wobei P1 eine erste Umfangs-Schrittlänge zwischen dem ersten Abschnitt und dem zweiten Abschnitt und P2 eine zweite Umfangs-Schrittlänge zwischen dem zweiten Abschnitt und einem dritten Abschnitt ist; und P1' eine erste Umfangs-Schrittlänge zwischen dem ersten Abschnitt und einem zweiten Abschnitt und P2' eine zweite Umfangs-Schrittlänge zwischen dem zweiten Abschnitt und einem dritten Abschnitt ist, und mindestens eine der folgenden Bedingungen erfüllt wird:

$$P1 \neq P1'$$

oder

$$P2 \neq P2'.$$

**Revendications**

1. Appareil de confection de pneumatiques, possédant un tambour (12) de confection de pneumatiques destiné à étirer et maintenir un élément de pneumatique, formé de plusieurs parties de maintien (22) destinées à tirer l'élément de pneumatique sur le tambour (12) de confection de pneumatiques, **caractérisé en ce que** le pas des parties adjacentes de maintien le long de la circonférence externe du tambour (12) de confection de pneumatiques est réglé afin qu'il soit différent du pas d'une autre partie adjacente de maintien le long de la circonférence externe du tambour (12) de confection du pneumatiques.

2. Appareil de confection de pneumatiques selon la revendication 1, **caractérisé en ce que** le tambour (12) de confection de pneumatiques comporte plusieurs segments identiques (20).

3. Appareil de confection de pneumatiques selon la revendication 1, **caractérisé en ce que** le tambour (12) de confection de pneumatiques comporte un premier ensemble de maintien ayant trois parties consécutives de maintien alignées dans une certaine direction circonférentielle du tambour de confection de pneumatiques telles que P1 est un premier pas circonférentiel entre une première partie de maintien et une seconde partie de maintien et P2 est un second pas circonférentiel entre la seconde partie de maintien et une troisième partie de maintien, et un second ensemble de maintien ayant trois parties consécutives de maintien dans ladite direction circonférentielle du tambour de confection de pneumatiques, une première partie de maintien du second ensemble étant la troisième partie de maintien du premier ensemble de maintien et P1' est un premier pas circonférentiel entre la première partie de maintien et la seconde partie de maintien et P2' est un second pas circonférentiel entre la seconde partie de maintien et une troisième partie de maintien, et **en ce que** l'une des relations suivantes est obtenue :

$$P1 \neq P1'$$

ou

$$P2 \neq P2'.$$

4. Appareil de confection de pneumatiques selon la revendication 2 ou 3, **caractérisé en ce que** le segment est formé avec deux trous (22) d'aspiration constituant des parties de maintien.

5. Appareil de confection de pneumatiques selon la revendication 2 ou 3, **caractérisé en ce que** le segment est formé avec un aimant constituant une partie de maintien.

6. Appareil de confection de pneumatiques selon la revendication 4, **caractérisé en ce que** les deux trous d'aspiration (22) sont alignés sur une droite qui s'étend dans la direction axiale du tambour de confection de pneumatiques.

7. Appareil de confection de pneumatiques selon la revendication 6, **caractérisé en ce que** chaque trou d'aspiration (22) est décalé par rapport à un axe central circonférentiel (Oa) du segment (20) dans la direction circonférentielle.

8. Appareil de confection de pneumatiques selon la revendication 2, **caractérisé en ce que** le segment est formé avec trois trous d'aspiration (22).

9. Appareil de confection de pneumatiques selon la revendication 8, **caractérisé en ce que** les trois trous d'aspiration (22) sont alignés sur une droite ($L_h$) qui s'étend par chaque centre des trous d'aspiration.

10. Appareil de confection de pneumatiques selon la revendication 9, **caractérisé en ce qu'**un trou d'aspiration médian (22b) est décalé par rapport à l'axe central circonférentiel du segment (Oa) dans la direction circonférentielle.

11. Procédé de confection d'un pneumatique, comprenant les étapes suivantes : le tirage d'un élément de pneumatique radialement vers l'intérieur vers une circonférence externe d'un tambour (12) de confection de pneumatiques à plusieurs parties disposées dans la direction circonférentielle, **caractérisé en ce que** l'élément de pneumatique est tiré alors que le pas circonférentiel de la paire adjacente de parties de maintien (22) est différent du pas circonférentiel d'une autre paire adjacente de parties de maintien (22).

**12.** Procédé selon la revendication 11, **caractérisé en ce que** l'élément de pneumatique est tiré alors que trois pas différents sont formés parmi les parties de maintien adjacentes dans la direction circonférentielle.

**13.** Procédé selon la revendication 11, **caractérisé en ce que** l'élément de pneumatique est tiré par un premier ensemble constitué de trois parties consécutives dans une direction circonférentielle et un second ensemble adjacent constitué de trois parties consécutives de maintien dans la même direction circonférentielle, P1 étant un premier pas circonférentiel entre une première partie et une seconde partie et P2 étant un second pas circonférentiel entre la seconde et une troisième partie, et P1' étant un premier pas circonférentiel entre la première partie et une seconde partie et P2' étant un second pas circonférentiel entre la seconde partie et une troisième partie, et l'une au moins des conditions suivantes est remplie :

$$P1 \neq P1'$$

ou

$$P2 \neq P2'.$$

# FIG. 1

# FIG. 2

# FIG. 3

# FIG. 4

EP 0 862 986 B1

# FIG. 5

# FIG. 6

# FIG. 7

EP 0 862 986 B1

# FIG. 8